# EUROPEAN PATENT APPLICATION

(11) **EP 2 768 236 A1**
(43) Date of publication of application: **20.08.2014**
(21) Application number: 13169337.6
(22) Date of filing: 27.05.2013
(51) Int. Cl.: H04N 21/858, H04N 21/81, H04N 21/4725, H04N 21/4722, H04N 21/482, H04N 21/434, H04N 21/462

(54) **Device and method receiving and displaying an electronic program guide**

(30) Priority: 13.02.2013 IN CH06222013
(71) Applicant: TP Vision Holding B.V., 1097 JB Amsterdam (NL)
(72) Inventor: Kassala, Hemakumar, 1097 JB Amsterdam (NL); Mevissen, Perry, 1097 JB Amsterdam (NL)
(74) Representative: Busch, Patrick

(57) **Abstract**

The invention provides a method and device (10) receiving and displaying an electronic program guide, EPG, the device comprising
- a receiver (11) for receiving a an Event Information Table, EIT, of the EPG;
- a controller (12) for interpreting the EIT,
wherein the controller is adapted to interpret (32) an application priority flag in the EIT, and depending on the value of the application priority flag, either
- retrieve (33a) from the EIT an application identifier, for identifying an application that handles rendering of content associated with the EIT, or
- retrieve (33b) from the EIT a digital reference for identifying a network location where content associated with the EIT is available; and
wherein the device is adapted to render (37) the content associated with the EIT on the request of the user..

## Description

### Field of the invention

The invention relates to a device and method for receiving and displaying an Electronic Program Guide (EPG) for a media application such as television or radio.

### Background of the invention

. The term Electronic Program Guide is here also used to encompass Interactive Program Guides (IPG), which provide users of a multimedia application with interactive menus including scheduling information for current, future and possibly past programming.

One example of such EPG system is the Digital Video Broadcasting EPG system, in common use in Europe and other parts of the world, in which scheduling information is comprised in DVB-SI (Digital Video Broadcasting Service Information) Event Information Tables (EITs).

Systems are known in which users can view broadcast programs from the past (i.e. programs that have already been broadcast). A user may view a list of past programs made available via a user terminal, and then select a "catch-up" option to start playback of the past program, for example via the HbbTV (Hybrid Broadcast Broadband TV) application. The past program content is then typically retrieved by the user terminal from a so-called "non-linear" source such as a video server connected to the internet which is in a bidirectional connection with the user's terminal, and rendered on a display.

HbbTV has been proposed as ETSI standard, published as TS 102 796 and is being developed by the HbbTV consortium. HbbTV is a system for browser-based, interactive TV applications combined with DVB signalling protocols.

DVB provides an Application Information Table (AIT) in which the requirement of an HbbTV application for interactive TV services can be signalled.

HbbTV itself makes use of CE-HTML, an adoption of HyperText Markup Language (HTML) and Cascaded Style Sheets (CSS) for Consumer Electronics (CE) devices, primarily devices other than PCs such as televisions and mobile devices.

A disadvantage of current systems is that while using the above mentioned technologies, the Program Guide is to some extent interactive, the included program information is primarily textual in nature. It is a goal of the invention to provide an EPG with richer information about programs. It is a further goal to provide an enhanced EPG for devices with different capabilities.

### Summary of the invention

The invention provides a device for receiving and displaying an electronic program guide, EPG, comprising
- a receiver for receiving a an Event Information Table, EIT, of the EPG;
- a controller for interpreting the EIT,
   wherein the controller is adapted to interpret an application priority flag in the EIT, and depending on the value of the application priority flag, either
   - retrieve from the EIT an application identifier, for identifying an application that handles rendering of content associated with the EIT, or
   - retrieve from the EIT a digital reference for identifying a network location
      where content associated with the EIT is available; and
wherein the device is adapted to render the content associated with the EIT on the request of the user.

The invention can thus advantageously provide additional content, linked via an EIT, to a wide variety of consumer electronics devices, in particular devices including a (CE) web browser and devices without a browser. Depending on the application priority flag, either an application (for example HbbTv) for rendering additional content is available, or the device itself can obtain the additional content via a digital reference. This allows broadcast EPGs to provide similar functionality as EPGs provided over bi-directional links. The reference can be designed so that both device with a (CE) web browser and without one can obtain and render the additional content.

In an embodiment according the invention, the EIT is associated with a broadcast program, and the content associated with the EIT is video content, said video content at least partly corresponding to the video content of the broadcast program. The video content can be a preview clip or a the full contents of the (earlier broadcast) program.

In an embodiment according the invention, the EIT is associated with a future broadcast program, and the content associated with the EIT is a preview of said future broadcast program.

In an embodiment according the invention, the EIT is associated with a past broadcast program, and the content associated with the EIT corresponds to said past broadcast program.

In an embodiment according the invention, the device is adapted to receive broadcast content from a first connection, such as a Digital Video Broadcasting, DVB, connection, and to receive additional content from a second connection, such as an internet connection. The first connection can be a so-called linear connection (DVB-T, DVB-C, DVB-H, etc) and the second connection can be a so-called non-linear connection, such as a connection with a server over a packet-switched network (e.g. over the internet).

In an embodiment according the invention, the application identified by the application identifier is a Hybrid Broadcast Broadband Television, HbbTV, application. This is a standardized application particularly suitable for retrieving and displaying non-linear video content on a terminal.

In an embodiment according the invention, the digital reference comprises a Uniform Resource Locator, URL. In an embodiment according the invention, the digital reference comprises a Multipurpose Internet Mail Extensions, MIME, type of the associated content. With a URL and/or MIME type, a terminal apparatus can retrieve the additional content and display it. In an exemplary embodiment for a device with a web browser, the URL will generally be sufficient. the web browser can determine from the returned content-type how the content is to be rendered. In a further exemplary embodiment, a devices without a web browser may consult the MIME type in order to determine a if the device can obtain and render the content "natively", that is without the abstraction layer provided by a web browser.

In an embodiment according the invention, the application flag, and the application identifier or the digital reference are comprised in an EIT signaling descriptor which is included in an EIT section.

The invention further provides a method for receiving and displaying an electronic program guide, EPG, the method comprising
- receiving an Event Information Table, EIT, of the EPG;
- interpreting an application priority flag in the EIT, and depending on the value of the application priority flag, either
   - retrieving from the EIT an application identifier, for identifying an application that handles rendering of content associated with the EIT, or
   - retrieving from the EIT a digital reference for identifying a network location where content associated with the EIT is available; and
- rendering the content associated with the EIT on the request of the user.

The method according the invention can be combined with any of the additional features described in this application.

### Brief description of the Figures

On the attached drawing sheets,
- figure 1 schematically shows a terminal according an embodiment of the invention;
- figure 2 schematically shows a content distribution system according to an embodiment of the invention;
- figure 3 schematically shows a flow chart of a method according to an embodiment of the invention;
- figures 4 and 5 schematically show an electronic program guide according to an embodiment of the invention; and
- figure 6 shows an exemplary definition of an information section from an Event Information Table according to an embodiment of the invention.

### Detailed description

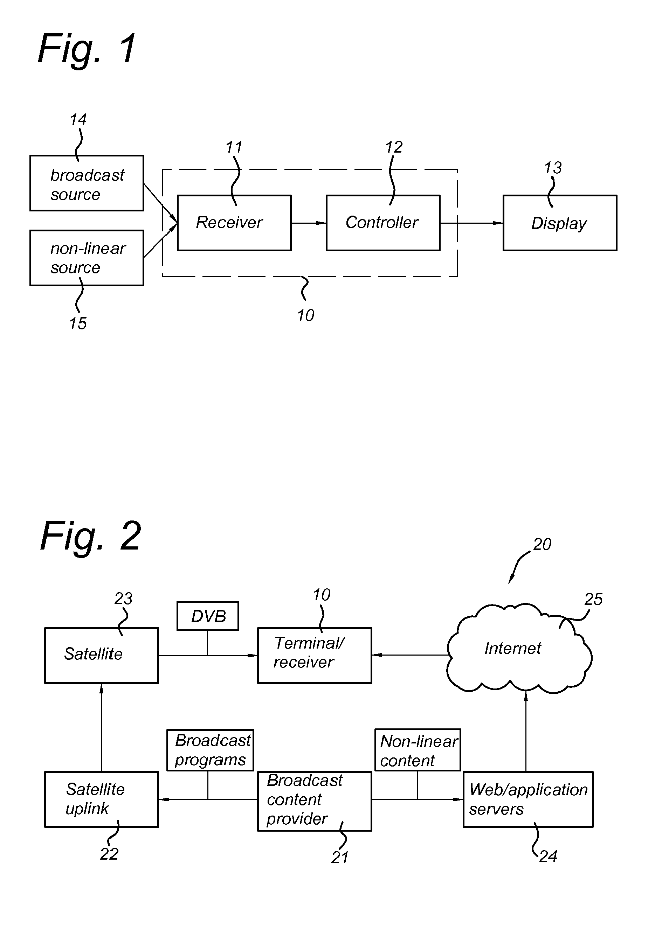

Figure 1 schematically shows a terminal 10 according an embodiment of the invention. for receiving both broadcast programming from a broadcast source 14 and further content via a "non-linear" (on demand) source 15. An example of a broadcast source 14 is a satellite receiver for receiving a DVB-S signal. Other examples include DVB-T or DVB-C receivers (where DVB-x is indicated, also later standards such as T2, C2, NGH, etc are included). An example of a non-linear source is the internet, connected via a wireless (for example W-LAN, IEEE 802.11x) or wired (for example UTP) interface of the terminal 10.

A receiver 11 receives content from sources 14, 15 and makes it available to a controller 12. The controller 12 interprets the content and is configured to display an EPG or content on an output module, such as a display 13. The display 13 can be part of terminal 10 (for example, if the terminal is a television or mobile device) or external to it (for example if the terminal is a set-top box) The terminal will typically be provided with volatile and/or non-volatile memory to at least temporary store (parts of) content received via the sources.

Figure 2 schematically shows a content distribution system 20 according to an embodiment of the invention. Content is made available by broadcast content provider 21. Broadcast programs are distributed in a known way, in the example of figure 2 via a satellite uplink 22 to a satellite 23 and from there to a satellite receiver of terminal 10, according to the DVB-S protocol. Many other broadcast content distribution schemes which can be used with the current invention are available for the skilled person. For example, instead of using a satellite broadcast system, broadcast content can made available using any linear broadcast technology, such as cable and terrestrial broadcasting.

The broadcast content provider 21 also maintains web and/or application servers 24 which are connected to the internet 25. The servers 24 are typically used for making available non-linear content, that is, content which is distributed on-demand and not, in the manner of a traditional broadcast, to all terminals simultaneously. The connection between terminal 10 and web/application servers 24 is typically a bi-directional connection, so that the terminal can send requests to the servers 24 and the servers can respond by sending content to the terminal 10.

EPG data may be distributed as part of the broadcast signal via the broadcast program route (that is, via 22, 23 in the example of figure 2). Alternatively or additionally, EPG data may be distributed via the non-linear content route (via 24, 25).

In an embodiment, AIT signalling within the broadcasted service provides the URL using which the terminal fetches the HbbTv application over the internet and renders the HTML page corresponding to the URL. In this embodiment, the server pointed at by the URL thus hosts the HbbTV application for the terminal.

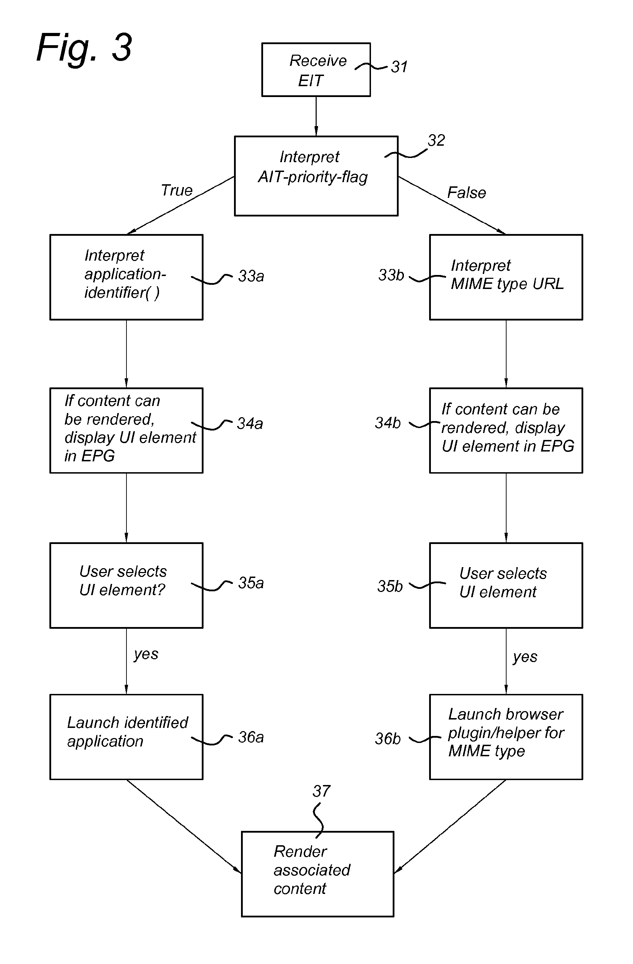

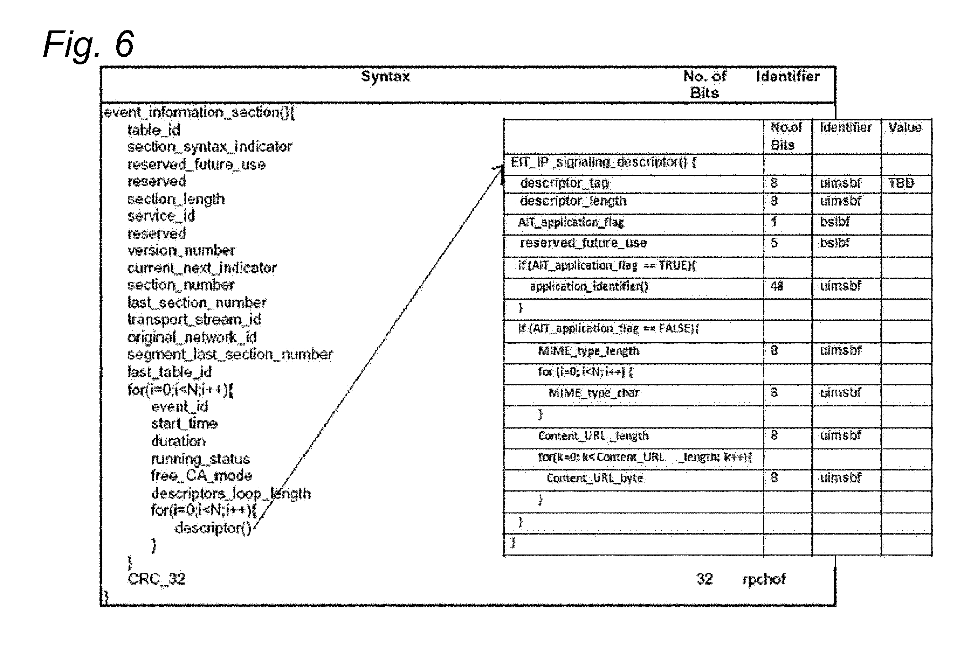

Figure 3 schematically shows a flow chart of a method according to an embodiment of the invention. In step 31, an Event Information Table (EIT), associated with an EPG item, is received. The EIT comprises an information section, in which one or more signalling descriptions are included (see figure 6). An exemplary definition of an EIT signalling description is shown in table 1.

**Table 1 - Example Event Information signaling description Table**

| | | | | No.of Bits | Identifier | Value |
|---|---|---|---|---|---|---|
| EIT_IP_signaling_descriptor() { | | | | | | |
| | descriptor_tag | | | 8 | uimsbf | TBD |
| | descriptor_length | | | 8 | uimsbf | |
| | AIT_priority_flag | | | 1 | bslbf | |
| | reserved_future_use | | | 5 | bslbf | |
| | if (AIT_priority_flag == TRUE){ | | | | | |
| | application_identifier() | | | 48 | uimsbf | |
| | } | | | | | |
| | If (AIT_priority_flag == FALSE){ | | | | | |
| | | MIME_type_length | | 8 | uimsbf | |
| | | for (i=0; i<N; i++) { | | | | |
| | | | MIME_type_char | 8 | uimsbf | |
| | | } | | | | |
| | | Content_URL_length | | 8 | uimsbf | |
| | | for(k=0; k< Content_URL _length; k++){ | | | | |
| | | | Content_URL_byte | 8 | uimsbf | |
| | | } | | | | |
| | } | | | | | |
| } | | | | | | |

The "descriptor_tag" and "descriptor_length" are used to identify the section.

The "AIT_priority_flag" has a Boolean value. A TRUE value indicates that there exists an interactive (for example HbbTv) application signalled within PMT (Program Map Table) or AIT (Application Information Table) of this service that handles the necessary navigation and rendering of content associated within this event. A FALSE value indicates that the content associated with this event shall be rendered by the CE device either using its native browser or will be directly decoded by the platform and rendered.

The invention can thus be used with CE devices that provide browser support. Such devices will require only the content_URL_byte data to render the content. The invention can also be used with devices that do not have a browser (i.e. that do not use the http protocol); these devices shall use the MIME type included in the EIT to decode the media content if supported.

In an embodiment, the value of "AIT_priority_flag" determines the interpretation of the rest of the table. If TRUE, then the next field shall be interpreted as being equal to one of the application_identifier() values signalled within AIT of that service and the application associated with this retrieved identifier shall be launched to render the associated content. If the value is FALSE, the next fields of the table are interpreted and retrieved as a MIME type and a URL. In that case, the retrieved "MIME_type_length" and "MIME_type_char" shall be used by the CE device in case the device does not support a browser and hence the device shall use the "MIME_type" value to decode the content referenced by "content_URL_byte(s)". The fields "content_URL_Length" and "content_URL_byte" shall be used by the browser in a CE device to render the content or in the absence of the browser the URL shall be used by the CE device in conjunction with the MIME-type to render the content.

In a variant of this embodiment, the application_identifier() values and MIME type and URL are all present in the EIT, and depending on the value of an application priority flag, either the application identifier or the MIME type / URL are retrieved and used.

The associated content can be any type of multimedia content that is associated with the program associated with the EIT. In an embodiment, the content is described in the "short event descriptor" and/or the "extended event descriptor" of the EIT. The content can for example be a preview of an upcoming or past program, for example in the form of an internet-distributable video stream. The preview can be a human-edited version of the program, or it can be a computer generated summary. A preview is typically associated with a future program. However, if the EPG also supports "catch-up" functionality (described below), a preview of past programs can help users to determine whether or not they want to use the catch-up function.

The associated content can also be the full program itself, for example in the form of an internet-distributable video stream. If the content is associated with an EPG item in the past (i.e. the broadcast is already past, or at least has already begun), the availability of the full program as associated content can be described as "catch-up" functionality.

Typically, full program content will be associated with programs in the past. However, it is also possible to associate full program content (possibly in combination with preview content) with programs in the future. For commercial reasons, the content provider may require additional payments for viewing full-program associated content of a future EPG item. The rendering application (described in more detail below) may in that case require authorisation for so-called "view-on-demand" or "pay-per-view" functionality.

Various combinations of associated content are possible. For example, an EPG may have as associated content both a free preview and a view-on-demand (i.e. non-free) full-program associated content for viewing the program ahead of time. The view-on-demand status may automatically change to a free "catch-up" status as soon as the program has been broadcast.

Returning to figure 3, the AIT_priority_flag is interpreted in step 32. It should be noted that the flag need not be called "AIT_priority_flag". Any, preferably descriptive, name will do. Depending on the Boolean value of the flag, processing continues in step 33a (Boolean TRUE) or 33b (Boolean FALSE).

In step 33a, the next field in the EIT signalling description may be interpreted as an application identifier or at least the application identifier field is retrieved from the EIT. For example, there may exist an interactive (HbbTv) application already that is signalled within the AIT signalling that is carried within the PMT of the service which aggregates the rendering of such event previews. In this case the signalling that is required within an EIT section is to just include the respective application_identifier() signalled within the AIT of that service.

In alternative step 33b, the next fields (or, more generally, other fields) in the EIT signalling description may be interpreted, as described earlier, as MIME type (of the associated content) and as URL (where the associated content may be obtained). The MIME type and URL values are retrieved from the EIT.

In steps 34a and 34b, the EPG is displayed, and a specific User Interface (UI) element is depicted in reference to the program corresponding to the received EIT. The display of the UI element can be on the condition that the browser is able to render the associated content. This condition may be checked by examining the MIME type and/or testing the URL availability in steps 33b or by checking the availability of the identified application in steps 33a. The UI element can be an icon or other graphic indicator (menu, push button, etc) so that the user knows that e.g. a preview, catch-up, or pay-per-view functionality is available.

In steps 35a, 35b, it is checked whether the user selects the UI element. If not, regular EPG handling is performed (i.e. interactive scrolling of program guide data, etc).

If yes, in step 36a (in the AIT_priority_flag = TRUE branch) the identified application (from step 34a) is retrieved from the network (a server) and launched. In this case, the life cycle of the associated content playout is primarily controlled by the identified application. An example is an HbbTv browser in a TV which in association with the server (together) control the life cycle of the application.

Alternatively in step 36b (in the AIT_priority_flag = FALSE branch), either a browser plugin/helper is launched or the associated content is recognized based on the MIME type and handled by the CE device outside of the browser context. In both of these cases, the CE device implementing the method controls the life cycle of the associated content playout.

In step 37, the associated content is rendered for the user. The content is typically retrieved from the non-linear source 15, for example from the web/application servers 24 available via the internet 25. In an embodiment, the URL of the content is provided in a PMT - AIT section.

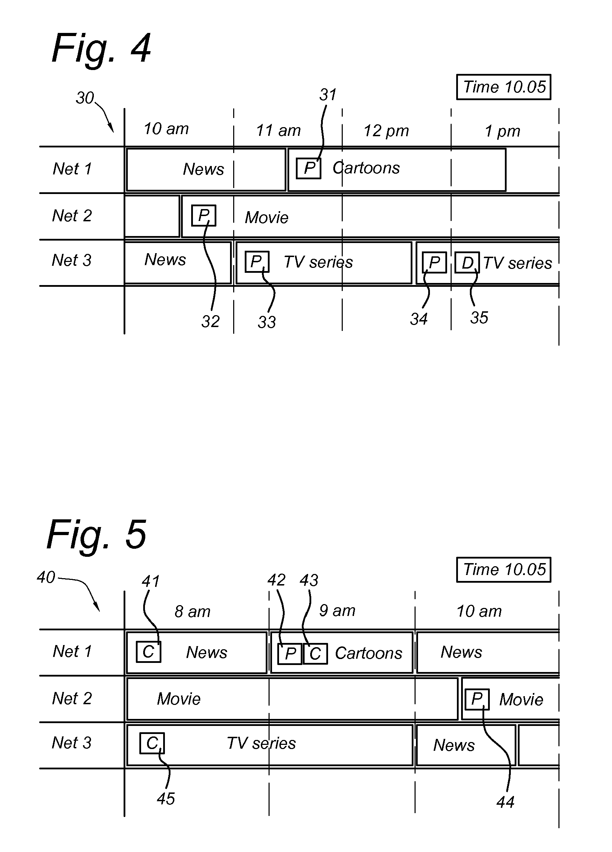

Figure 4 schematically shows an electronic program guide according to an embodiment of the invention. For simplicity, only 3 channels are shown ("Net 1", "Net 2", and "Net 3" and, on the horizontal axis, a time range from 10 am until 2pm). Each of the channels has its own row, with rectangles indicating programs, said rectangles corresponding to the time slot of the program as indicated on the horizontal axis. The current time is just after 10am. On "Net 1" a news program is being broadcast. This news program does not have any associated content, hence no additional UI element is shown. The next show is a cartoons program, for which preview associated content is available. This is indicated with a "P" symbol 31. If the user selects the UI element, for example by moving a cursor to it or by highlighting it using arrow-key navigation, followed by a confirmation (e.g. using an OK button), the associated content will be played in a suitable launched application, as described in reference to figure 3.

On the second channel, "Net 2" a movie will be broadcast at approximately 10.30. The "P" symbol 32 indicates that here too a preview is available. On the third channel, a News program is broadcast (no preview), and after that a TV series (preview available via symbol 33). After that, another tv series will be broadcast. In this case, two types of associated content are available. Symbol "P" 34 again indicates a free preview, while symbol "D" 35 indicates the availability of a pay-per-view version of the full program. When the user selects "D", the content will be rendered as in the other cases, but an additional authorisation step, such as the entering of a PIN code, may be added.

Figure 5 schematically shows an EPG that is partly in the past. The time is just after 10am. The news broadcast on the first channel at 8am is now in the past, and has a "C" symbol 41, indicating the availability of a "catch-up" full-program. By selecting the "C" symbol, the user can watch the entire news program as it was broadcast. For the cartoon program at 9 am, both a preview (symbol 42) and a full version (symbol 43) are available. For the movie at 10.30, which is in the future, only a preview is available (symbol 44). For the tv series at 8 am on the third channel, no preview but only a full "catch-up" version is available, via "C" symbol 45.

It should be noted that it is not essential that UI elements are shown in the EPG matrix view of programs and channels as shown in figures 4 and 5. In an embodiment, the UI elements are shown when a user selects a program from the EPG matrix view for detailed information. The UI elements relating to additional content can then be shown next to for example textual plot information or cast information.

Figure 6 shows an exemplary definition of an event information section from an Event Information Table according to an embodiment of the invention. The event information section includes one or more (as indicated by the "for" loop) descriptions, which are formatted according to table 1 or according to the graphic version shown in figure 6.

In the foregoing description of the figures, the invention has been described with reference to specific embodiments thereof. It will, however, be evident that various modifications and changes may be made thereto without departing from the scope of the invention as summarized in the attached claims.

In particular, combinations of specific features of various aspects of the invention may be made. An aspect of the invention may be further advantageously enhanced by adding a feature that was described in relation to another aspect of the invention.

It is to be understood that the invention is limited by the annexed claims and its technical equivalents only. In this document and in its claims, the verb "to comprise" and its conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one".

## Claims

1. Device (10) for receiving and displaying an electronic program guide, EPG, comprising
- a receiver (11) for receiving a an Event Information Table, EIT, of the EPG;
- a controller (12) for interpreting the EIT,
wherein the controller is adapted to interpret (32) an application priority flag in the EIT, and depending on the value of the application priority flag, either
- retrieve (33a) from the EIT an application identifier, for identifying an application that handles rendering of content associated with the EIT, or
- retrieve (33b) from the EIT a digital reference for identifying a network location where content associated with the EIT is available; and
wherein the device is adapted to render (37) the content associated with the EIT on the request of the user.

2. Device (10) according to claim 1, wherein the EIT is associated with a broadcast program, and the content associated with the EIT is video content.

3. Device (10) according to claim 2, wherein the EIT is associated with a future broadcast program, and the content associated with the EIT is a preview of said future broadcast program.

4. Device (10) according to claim 2, wherein the EIT is associated with a past broadcast program, and the content associated with the EIT corresponds to said past broadcast program.

5. Device (10) according to any of the previous claims, wherein the device is adapted to receive broadcast content from a first connection (14), such as a Digital Video Broadcasting, DVB, connection, and to receive additional content from a second connection (15), such as an internet connection.

6. Device (10) according to any of the previous claims, wherein the application identified by the application identifier is a Hybrid Broadcast Broadband Television, HbbTV, application.

7. Device (10) according to any of the previous claims, wherein the digital reference comprises a Uniform Resource Locator, URL.

8. Device (10) according to any of the previous claims, wherein the digital reference comprises a Multipurpose Internet Mail Extensions, MIME, type of the associated content.

9. Device (10) according to any of the previous claims, wherein the application flag, and the application identifier or the digital reference are comprised in an EIT signaling descriptor which is included in an EIT section.

10. Method for receiving and displaying an electronic program guide, EPG, the method comprising
- receiving (31) an Event Information Table, EIT, of the EPG;
- interpreting (32) an application priority flag in the EIT, and depending on the value of the application priority flag, either
- retrieving (33a) from the EIT an application identifier, for identifying an application that handles rendering of content associated with the EIT, or
- retrieving (33b) from the EIT a digital reference for identifying a network location where content associated with the EIT is available; and
- rendering (37) the content associated with the EIT on the request of the user.

11. Method according to claim 10 in combination with any of the additional features of any of claims 2-9.
